# EUROPEAN PATENT APPLICATION

(11) **EP 2 299 743 A1**
(43) Date of publication of application: **23.03.2011**
(21) Application number: 10177036.0
(22) Date of filing: 16.09.2010
(51) Int. Cl.: H04W 4/06

(54) **Providing broadcast content to a mobile terminal**

(30) Priority: 16.09.2009 ES 200930697
(71) Applicant: Vodafone Group PLC, Newbury Berkshire RG14 2FN (GB); Vodafone España, S.A.U., 28108 Alcobendas (ES)
(72) Inventor: Diaz Mateos, Maria, 28050, Madrid (ES); De Pasquale, Andrea, E-28050, Madrid (ES); Dominguez Romero, Francisco, E-28050, Madrid (ES)
(74) Representative: Keston, David Arthur

(57) **Abstract**

A method and cellular communication network are described for providing broadcast content to a mobile terminal (10). A broadcast content network hub (32) located in a network element (14,16) of the radio access network (12) of the cellular communication network receives the broadcast content (24) from a broadcast content source external to the cellular communication network. It provides the broadcast content to the mobile terminal over a user connection (30).

## Description

### BACKGROUND OF THE INVENTION

### Technical field

The present invention relates to a method for use in a cellular communication network of providing broadcast content to a mobile terminal as well as to a corresponding network element of a cellular communication network.

### Description of related art

In current cellular communication networks the broadcast content service is made available through a broadcast content server, which in case of mobile TV it is usually referred to as "TV server". The TV server is a part of the core (backbone) network. It receives TV-signals corresponding to a plurality of TV-channels. In response to request of a mobile terminal for accessing a TV channel, a user connection (user-plane) is set-up from the TV-server to the mobile terminal. So, current broadcast content services in cellular communication networks require the transmission of a specific data flow for each user accessing broadcast content.

When several mobile terminals request access to the same content, this content is transported across the cellular communication network towards each specific terminal. This data flow multiplication in the cellular network may be either in the core network, i.e. in case of third generation (3G) networks between the Gateway GPRS Support Node (GGSN) and Serving GPRS Support Node (SGSN) as well as the SGSN and the Radio Network Controller (RNC), and/or in the radio access network, i.e. between the RNC and the Node B's.

Release 6 of the 3GPP standard defines a feature called Multimedia Broadcast & Multicast Service (MBMS). This feature allows the cellular network to send data in a point-to-multipoint fashion over the air interface to subscribers in the same cell that are interested to receive the service. Sending data in a point-to-multipoint way ensures that users receiving the same service receive the same data stream/channel, i.e. the channel is a point-to-multipoint (multicast) channel. This simultaneous reception by multiple subscribers means that the data does not have to be sent individually to each subscriber on a point-to-point channel. Hence there is no need for data flow multiplication and network resources are conserved.

However, mobile terminals need to be configured for receiving MBMS data by loading them with appropriate software, so not all mobile terminals can support MBMS. Furthermore, in order to achieve significant savings in transport resources in the cellular communication network, there should be a considerable number of MBMS terminals in each cell.

### SUMMARY OF THE INVENTION

It is an object of the invention to provide a method of providing broadcast content to mobile terminals and a corresponding cellular communication network, resulting in data flow transport savings in the cellular communication network.

Thereto, according to the invention a method and a cellular communication network according to the independent claims are provided. Favourable embodiments are defined in the dependent claims.

According to an aspect of the invention, a method is provided for use in a cellular communication network of providing broadcast content to a mobile terminal. The method comprises the step of receiving the broadcast content from a broadcast content source external to the cellular communication network by a broadcast content network hub located in the radio access network of the cellular communication network. The broadcast content network hub provides the broadcast content to the mobile terminal over a (point-to-point) user connection.

According to a further aspect of the invention, a network element is provided, which is located in the radio access network of the cellular communication network and which comprises a broadcast content network hub. The broadcast content network hub is configured for receiving broadcast content from a broadcast content source external to the cellular communication network and providing the broadcast content to a mobile terminal over a (point-to-point) user connection.

So, according to the present invention a TV or radio receiver is installed in selected network elements in the radio access network (e.g. base stations or control nodes) and for example the satellite TV signal, DVB-T signal, Analogue TV-signal, or AM/FM radio signal is received and provided to the mobile terminal.

By doing so, there is no need to transport the broadcast content through the whole cellular communication network since the data for the user - user plane - is made available at a network element (base station or control node) closer to the location of the user. As a result, the traffic load in the network is decreased, and it decreases proportionally to the amount of broadcast TV/Radio content data received by customers. In some of the network nodes savings in processing are obtained.

According to an embodiment of the present invention, the provision of the broadcast content is initiated by a signalling procedure between the mobile terminal and a broadcast content server resulting in the set-up of a user connection (user plane) from the broadcast content server to the mobile terminal.

However, the content is not inserted by the broadcast content server and is instead inserted in the established user connection by the broadcast content network hub.

As a result, the normal signalling to establish a point-to-point connection between the client in the mobile terminal and the broadcast content server in the cellular communication network is left unchanged; there are no special requirements for mobile terminals for receiving the broadcast content and the broadcast content service is transparent to them, so this solution applies to legacy and new mobiles without any change. The user connection between the mobile terminal and the broadcast content server is left empty until the broadcast content network hub is located.

A preferred embodiment of implementing the provision of the broadcast content according to the present invention is as follows: a request for broadcast content of a mobile terminal is sent to the broadcast content server comprising a location of the mobile terminal. The broadcast content server selects a broadcast content network hub out of a plurality of broadcast content network hubs for providing the broadcast content to the mobile terminal based on the location of the mobile terminal. In the case where a broadcast content network hub is available a request for broadcast content insertion into the user connection is sent to a control node located in the radio access network of the cellular communication network.

In the alternative case where a broadcast content network hub is not available, the broadcast content server sends the requested broadcast content to the mobile terminal over the user connection.

The broadcast content server may obtain information regarding a model and a software version of the mobile terminal, determine a content format of the broadcast content to be provided to the mobile terminal and include information regarding the content format in the request for content insertion towards a specific broadcast content network hub.

Depending on the radio conditions, the control node has three options upon receiving the request for broadcast content insertion:
- rejecting the request for broadcast content insertion and sending a broadcast content insertion reject message to the broadcast content server. The broadcast content server then sends the requested broadcast content to the mobile terminal over the user connection.
- the control node acts as the broadcast content network hub and inserts the broadcast content into the user connection.
- the control node resends the request for broadcast content insertion to a specific base station to be selected based on the location of the terminal.

The base station has two options upon receiving the request for broadcast content insertion:
- the base station acts as the broadcast content network hub and inserts the broadcast content into the user connection.
- the base station rejects the request for broadcast content insertion and sends a broadcast content insertion reject message to the control node.

The control node either resends the broadcast content insertion reject message to the broadcast content server, which sends the requested broadcast content to the mobile terminal over the user connection, or the control node acts as the broadcast content network hub and inserts the broadcast content into the user connection.

The level of hierarchy of the broadcast content network hubs can be chosen and implemented by the operator according to the used radio access technology, target terminal population and transport savings targets

For example, in case that mobility is not required the broadcast content network hubs are preferably located in the base stations of the radio network. However, in case mobility is required, the content network hubs can additionally or alternatively be implemented at the control node of the base stations.

In this case handover may be implemented as follows: in case of handover of the mobile terminal from a first base station to a second base station a control node sends a request to the first base station to remove the insertion of the broadcast content into the user connection of the mobile terminal and a request to the second base station for broadcast content insertion into the user connection of the mobile terminal.

In order to implement handover or macro-diversity an additional broadcast content network hub may be located in a control node of the plurality of base stations. In case of handover of the mobile terminal from a first base station to a second base station the broadcast content network hub in the control node inserts the broadcast content into the user connection to the mobile terminal. Furthermore, the control node sends a request to the first base station to remove the insertion of the broadcast content into the user connection of the mobile terminal.

Alternatively, a broadcast content network hub may be located in a control node of the radio network and not in a plurality of base stations under control of the control node. As a result, handover or macro-diversity by sending the broadcast content from the broadcast content network hub to a plurality of base stations under its control. So, in this case the handover procedure is easily implemented but no transmission savings are obtained in the radio access network.

The broadcast content network hub receives the broadcast content, preferably decoding the broadcast content and re-encoding it into a format suitable for the mobile terminal. Preferably, the format of the re-encoding is a function of the radio access network load and may be selected from amongst a set of supported data rates. When the load is low, the coding rate of the content and therefore the quality thereof can be high. When the load increases, the content coding rate can be reduced, resulting in a decreased quality but using less capacity of the network.

In accordance with a further aspect of the present invention there is provided a network element located in the radio access network of a cellular communication network and comprising a broadcast content network hub, the broadcast content network hub being configured for:
∼ receiving broadcast content from a broadcast content source external to the cellular communication network; and
∼ providing the broadcast content to a mobile terminal over a user connection.

A cellular communication network comprising such a network element may further comprise a broadcast content server configured for initiating the provision of the broadcast content in response to a signalling procedure between the mobile terminal and the broadcast content server by setting up a user connection from the broadcast content server to the mobile terminal and wherein the broadcast content network hub is configured for inserting the broadcast content into said user connection.

Preferably, the broadcast content server is further configured for:
∼ receiving a request for broadcast content of a mobile terminal comprising a location of the mobile terminal;
∼ selecting a broadcast content network hub out of a plurality of broadcast content network hubs for providing the broadcast content to the mobile terminal based on the location of the mobile terminal; and
∼ in case that a broadcast content network hub is available sending a request for broadcast content insertion into the user connection to a control node located in the radio access network of the cellular communication network.

Conveniently such a broadcast content server may further be configured for:
∼ obtaining information regarding a model and a software version of the mobile terminal,
∼ determining a content format, including a set of supported data rates, of the broadcast content to be provided to the mobile terminal and
∼ including information regarding the content format in the request for broadcast content insertion.

The control node may be configured for rejecting the request for broadcast content insertion and sending a broadcast content insertion reject message to the broadcast content server and the broadcast content server may be configured for sending the requested broadcast content to the mobile terminal over the user connection upon receiving the broadcast content insertion reject message.

Alternatively or additionally, the control node may be configured for acting as the broadcast content network hub and inserting the broadcast content into the user connection upon receiving the request for broadcast content insertion.

The control node may be configured for resending the request for broadcast content insertion to a base station.

The base station may then be configured for acting as the broadcast content network hub and inserting the broadcast content into the user connection upon receiving the request for broadcast content insertion.

The base station may also be configured for rejecting the request for broadcast content insertion and sending a broadcast content insertion reject message to the control node.

The control node may then be configured for resending the broadcast content insertion reject message to the broadcast content server and the broadcast content server is configured for sending the requested broadcast content to the mobile terminal over the user connection upon receiving the broadcast content insertion reject message.

The control node may be configured for acting as the broadcast content network hub and inserting the broadcast content into the user connection upon receiving the broadcast content insertion reject message.

The broadcast content server is preferably configured for sending the requested broadcast content to the mobile terminal over the user connection in case that a broadcast content network hub is not available.

The broadcast content network hubs are conveniently located in a plurality of base stations of the radio network.

And in cases of handover of the mobile terminal from a first base station to a second base station a control node may be configured for sending a request to the first base station to remove the insertion of the broadcast content into the user connection of the mobile terminal and a request to the second base station for broadcast content insertion into the user connection of the mobile terminal.

Additionally or alternatively a broadcast content network hub may be located in a control node of the plurality of base stations. And in cases of handover of the mobile terminal from a first base station to a second base station the control node may be configured for acting as the broadcast content network hub and inserting the broadcast content into the user connection to the mobile terminal. The control node may then be configured for sending a request to the first base station to remove the insertion of the broadcast content into the user connection of the mobile terminal.

Alternatively, a broadcast content network hub may be located in a control node of the radio access network and not in a plurality of base stations under control of the control node.

In any case, the broadcast content network hub is preferably configured for decoding the broadcast content and re-encoding it into a format suitable for the mobile terminal. Conveniently, the format of the re-encoding may be a function of the radio access network load and may be chosen from amongst a set of supported data rates.

These and other aspects of the invention will be apparent from and elucidated with reference to the embodiments described hereinafter.

### BRIEF DESCRIPTION OF THE DRAWINGS

The invention will be better understood and its numerous objects and advantages will become more apparent to those skilled in the art by reference to the following drawing, in conjunction with the accompanying specification, in which:
Figure 1 shows a block diagram of a third generation cellular communication network wherein an embodiment of the present invention is implemented.
Figure 2 shows the implementation of a broadcast content network hub in a base station.
Figure 3 shows a signalling diagram of the fallback to broadcast content data supply by a broadcast content server.
Figure 4 shows a signalling diagram of an embodiment of the provision of the broadcast content according to the present invention in case of the radio network controller rejecting the service request of the broadcast content server.
Figure 5 shows a signalling diagram of an embodiment of the provision of the broadcast content according to the present invention in case of the radio network controller inserting the broadcast content into the user connection.
Figure 6 shows a signalling diagram of an embodiment of the provision of the broadcast content according to the present invention in case of the radio network controller requesting a base station to insert the broadcast content into the user connection.
Figure 7 shows a signalling diagram of an embodiment of the provision of the broadcast content according to the present invention in case of the base station inserting the broadcast content into the user connection.
Figure 8 shows a signalling diagram of an embodiment of the provision of the broadcast content according to the present invention in case of the base station rejecting the service request of the broadcast content server.
Figure 9 shows a signalling diagram of an embodiment of the provision of the broadcast content according to the present invention in case of the radio network controller forwarding the service rejection of the base station to the broadcast content server.
Figure 10 shows a signalling diagram of an embodiment of the provision of the broadcast content according to the present invention in case of the radio network controller inserting the broadcast content into the user connection after the service rejection of the base station.
Figure 11 shows an embodiment of the mobility procedure if the broadcast content network hub is located in the base station.

Throughout the figures like reference numerals refer to like elements.

### DETAILED DESCRIPTION OF THE PRESENT INVENTION

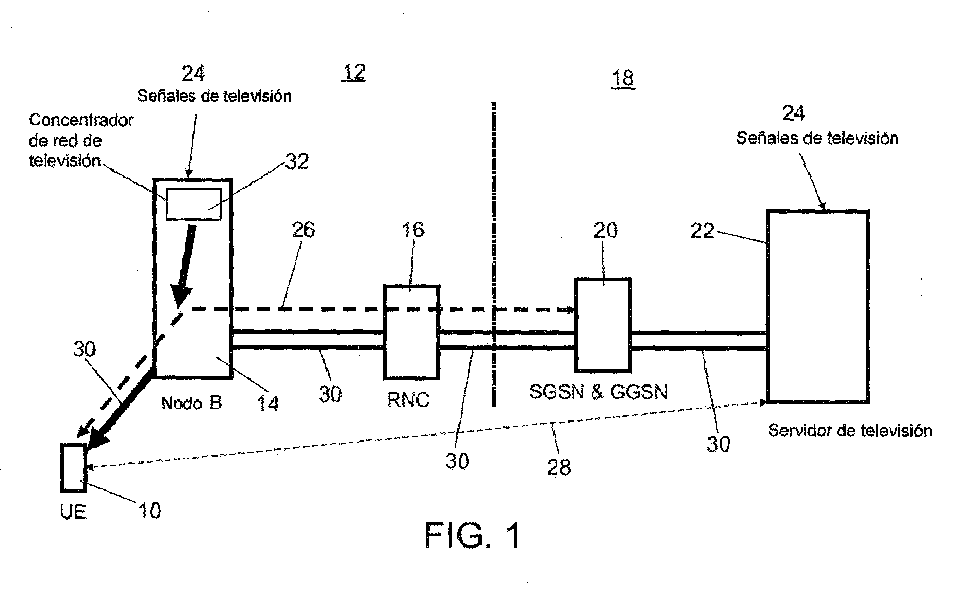

Figure 1 shows a simplified block diagram of a 3GPP cellular communication network wherein an exemplary embodiment the invention is implemented. The figure shows a mobile terminal, which will also be referred to in this detailed description as User Equipment UE 10, which is connected to a UMTS Terrestrial Radio Access Network UTRAN 12 via a radio-interface. The radio access network comprises a plurality of base stations, which will also be referred to in this detailed description as nodes B 14 (only a single one is shown), communicating with the UE 10 and a plurality of control nodes, which also be referred to in this detailed description as Radio Network Controllers 16 (RNC, only a single one is shown). The cellular communication network comprises furthermore a core network 18, which comprises amongst other nodes a Serving GPRS Support Node (SGSN) and a Gateway GPRS Support Node (GGSN), which are depicted together in the figure as reference 20. All nodes shown in figure 1 are well known to the skilled person and therefore there is no need to describe them in more detail here. They are interconnected by means of standardized interfaces. Also, these interfaces are well known to the skilled person. Furthermore, it should be understood that the implementation in a 3GPP cellular communication network is exemplary and that the invention can be applied in cellular communication networks having other radio access technologies, as well.

According to the prior art point-to-point broadcast content service, the provision of broadcast content is requested by the UE 10 from a broadcast content server 22. In the example shown in figure 1, the broadcast content is a TV-signal but of course the invention may be implemented for radio broadcast signals or any other type of broadcast signals. The broadcast content server 22, also referred to in this detailed description as TV server, receives TV-signals 24, each corresponding to a TV-channel. First, a signalling procedure 26 for PDP context activation is executed between the UE 10 and the core network 18. Then, an application level signalling exchange 28 is executed between the UE 10 and the TV server 22. This application level signalling exchange 28 results in the set-up of a point-to-point user connection 30, also referred to in this detailed description as user plane, between the TV server 22 and the UE 10. In the prior art arrangement this user plane 30 is used for providing the requested TV-channel from the TV server 22 to the UE 10.

According to the present invention, broadcast content network hubs 32, also referred to in this detailed description as TV network hubs, are located in the radio access network 12. In the exemplary embodiment of figure 1 the TV network hubs 32 are located in the nodes B 14 but of course they may alternatively or additionally be located in the RNC 16, as will be discussed in more detail herein after. A TV-network hub 32 receives the broadcast TV-signals 24 and inserts the TV-signal requested by the UE 10 into the user plane 30. As a result, only the part of the user plane 30 between the node B 14 and the UE 10 is used for transmission of the requested TV-signal, the remaining part of the user plane between the node B 14 and the TV server 22 is empty.

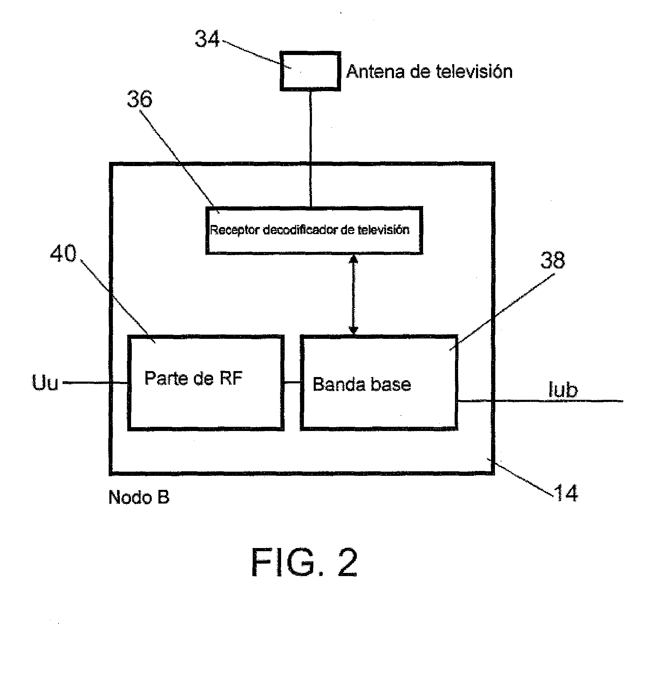

Figure 2 shows an exemplary implementation of the broadcast content network hub in a node B 14. The node B 14 comprises a TV antenna 34, and a TV receiver and decoder 36 for receiving and decoding the TV-signals 24. In the base band module 38 the signals are recoded into a format suitable for the UEs 10 to which the signals are provided and they are inserted into the proper user planes. The RF part 40 then transmits the relevant radio signals proper to the used Access Network Technology and the signals are transmitted to the respective UEs over the radio interface Uu.

According to a preferred embodiment, the format of the re-encoding is also a function of the radio access network load. When the load is low, the coding rate of the content and therefore the quality thereof can be high. When the load increases, the content coding rate can be reduced, resulting in a decreased quality but using less capacity of the network; at this point also different Quality of Service (QoS) can apply for different users.

In order for the broadcast content service to work properly, there is an exchange of control data between the TV server 22 and the plurality of TV network hubs 32. As a result, the TV server is able to select the proper TV network hub to provide broadcast content to a UE and furthermore it knows if it should send any content data over the user plane or not.

Thereto, the TV server 22 has the following functionality: it is configured for exchanging signalling data with all TV network hubs 32. It is able to identify the TV network hub 32 that can provide the TV content provision service to the UE. Furthermore, it is informed about the availability of TV signals in the TV network Hub 32. Finally, it is configured for transmission to the TV network hub 32 of the terminal and service specific parameters of the UE needed by the hub in order to correctly encode the content so that it can be displayed by the UE, as if it had been sent by the TV server.

The TV network hubs 32 have the following functionality: they are configured for exchanging signalling data with the TV server 22 and they are configured for receiving and decoding a number broadcast channels (e.g. DVB-T or Satellite TV signals or AM/FM Radio) and re-encode them into a format suitable for the UE, as described herein above with reference to figure 2.

The hierarchical level in the radio access network where the TV network hubs 32 are located may be chosen in order to deal with the requirements regarding the mobility of the mobile terminal in different radio access technologies, such as 2G, 3G Rel'99, 3G High Speed Downlink Packet Access (HSDPA), Long Term Evolution (LTE, 4G), or other ones. Furthermore, the target terminal population and the transport savings targets may be taken into account.

For example, when mobility is not required, for each communication the broadcast content may be inserted by only one TV network hub. In this case, it is advantageous to locate the hub in the base station providing coverage to the mobile terminal.

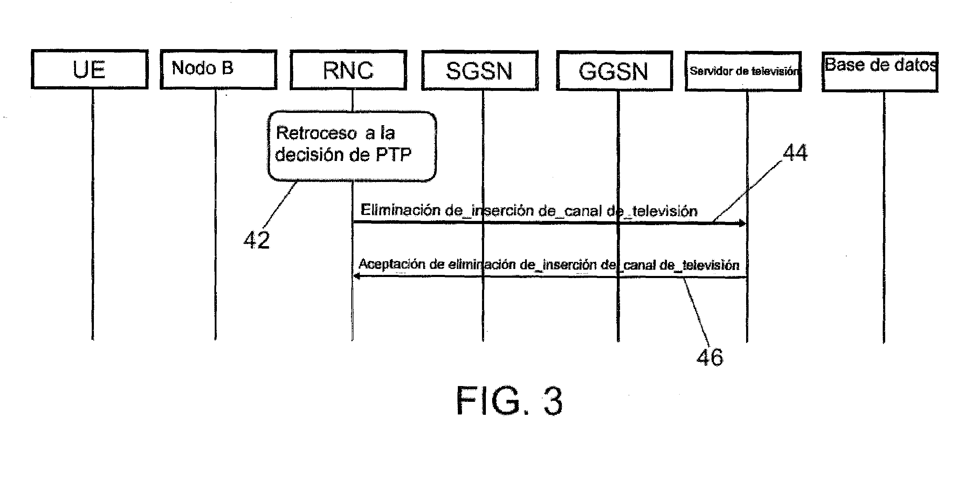

When mobility is required but macro-diversity is not used, for example in case of 2G or 3G terminals using HSDPA and LTE, there are 2 options: selecting the serving TV network hub located in the relevant base station to insert the broadcast content data and then changing the TV network hub from base station to the next base station which increase the signalling procedure or, as an alternative, the TV network hub can be directly placed in the control node. In this way, the broadcast content can be provided via all base stations under control of the control node without necessity of changing from one base station to other base station. However, in this case no transmission savings are obtained in the radio access network. In both cases, additionally a fallback to the normal point-to-point communication between the mobile terminal and the TV server 22 may be carried out if is detected that the mobile terminal is leaving its area of service (which in case that the TV network hub is located in a base station consists of a single cell and in case that the TV network hub is located in a control node consists of all base stations under control of the control node). This is shown in figure 3 for a 3G communication network. After taking the decision 42 to fallback to provision of the broadcast content by the TV server, the RNC sends a message 44 to the TV server requesting removal of the TV channel insertion. The TV server sends a confirmation 46 of this message to the RNC and starts the transmission of the broadcast content to the UE.

For 3G terminals Rel'99, macro-diversity, i.e. simultaneous connections with different nodes B may be implemented. In this case, it is advantageous to place the TV network hubs in the control node (RNC). As a result, the same user plane is transmitted in the downlink from different Nodes B and combined by the UE. For intra-RNC macro diversity nothing else is needed. If inter-RNC macro diversity is needed, there should be a communication link between the TV network hub in the RNC and the additional RNCs involved in the inter-RNC macro diversity. In case that the UE leaves the service area of the RNC or in the case of providing inter-RNC macro-diversity a fallback to the normal transmission of the broadcast content from the TV server to the UE may be conducted, as described herein above with reference to figure 3. In the case of inter-RNC macro-diversity, the TV network hub is located in the controlling RNC, transmitting the same content to the mobile via all active Nodes B, those under control of the controlling RNC and those under control of other RNCs.

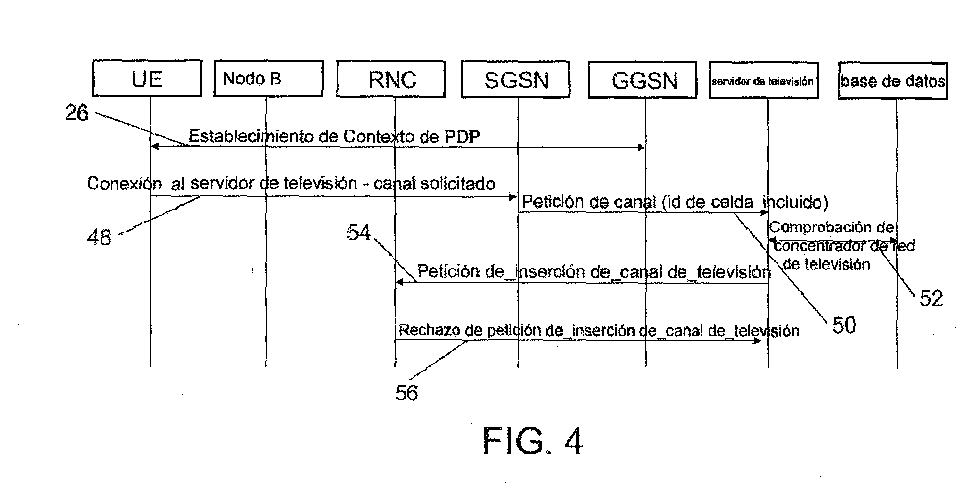

A preferred way of implementing the broadcast content service in a 3G cellular communication network will now be described with reference to figures 4-10. The UE connects to the TV server and it requests the channel to be watched 48. Furthermore, it includes the model and software version, in the same way as is done in the prior art point-to-point broadcast content provisioning system. For implementing the broadcast content service subject of the present description it is necessary to include the cell-identifier information in the channel request message 50 to the TV server. The TV server consults 52 a database comprising a listing with all TV network hubs and their locations, the channels provided thereby and the formats that they support, and based thereon, it determines the appropriate TV network hub associated to this cell.

If there is any such TV network hub, the TV server sends a message 54 requesting TV channel insertion to the RNC. Else the TV server itself sends the requested broadcast TV signal to the UE, as described herein above. In the message 54 the TV server includes the TV format information suitable for the given UE, the channel requested, the mobile identity and the cell-identifier.

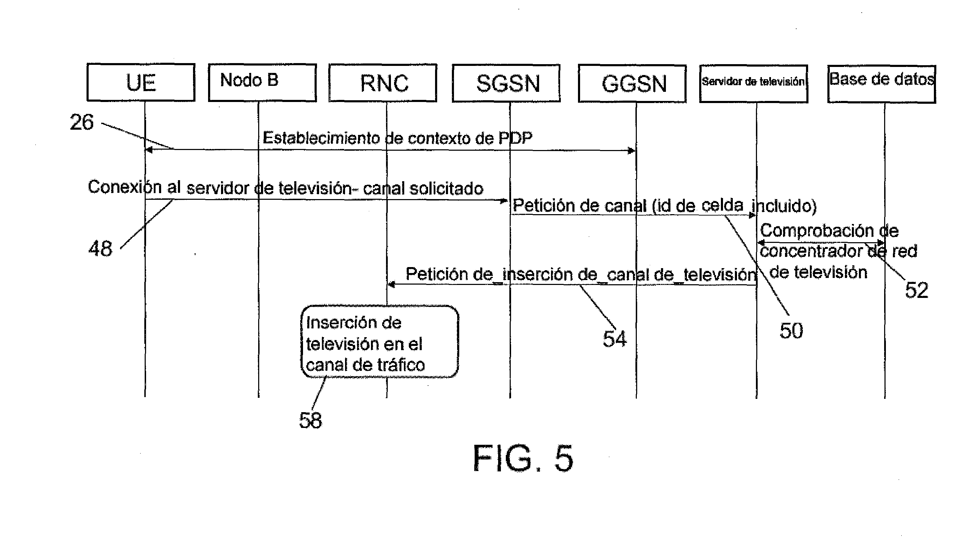

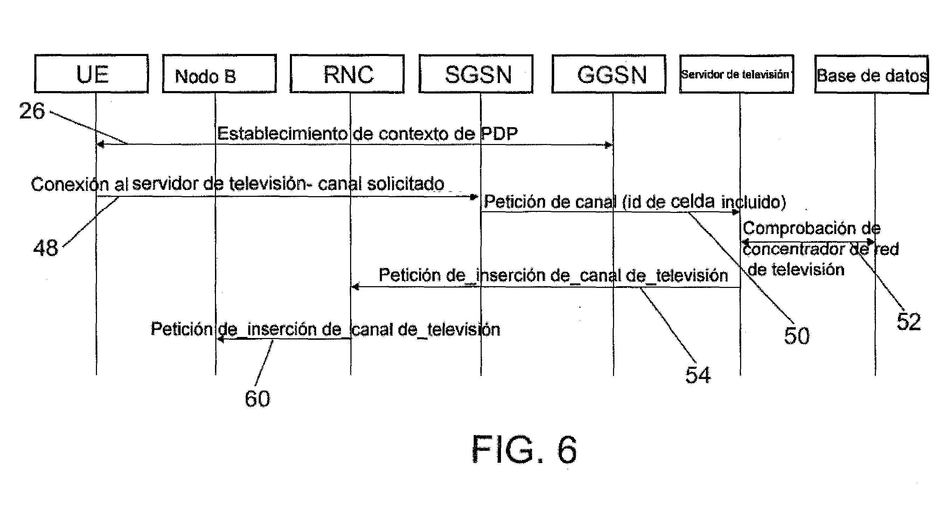

The RNC can take one of the following 3 decisions depending on the radio conditions (e.g. if the user is in soft handover), mobile terminal mobility and decoder availability in the RNC or Nodes B:
- The first option is that it rejects the TV channel insertion request by returning a corresponding message 56 to the TV server, as shown in figure 4. The TV server may then send the requested TV broadcast signal to the UE. For example, this can happen when the decoder is not correctly configured in the Radio Access Network.
- The second option is that the RNC inserts the channel directly in the user plane of the UE connection (see figure 5, step 58), acting as TV network hub. Of course this is only possible when the RNC is provided with such a TV network hub.
- The third option is that the RNC resends (see figure 6, step 60) the message requesting TV channel insertion to a Node B with the information of the radio link (user-plane of the terminal) in which the channel has to be inserted.

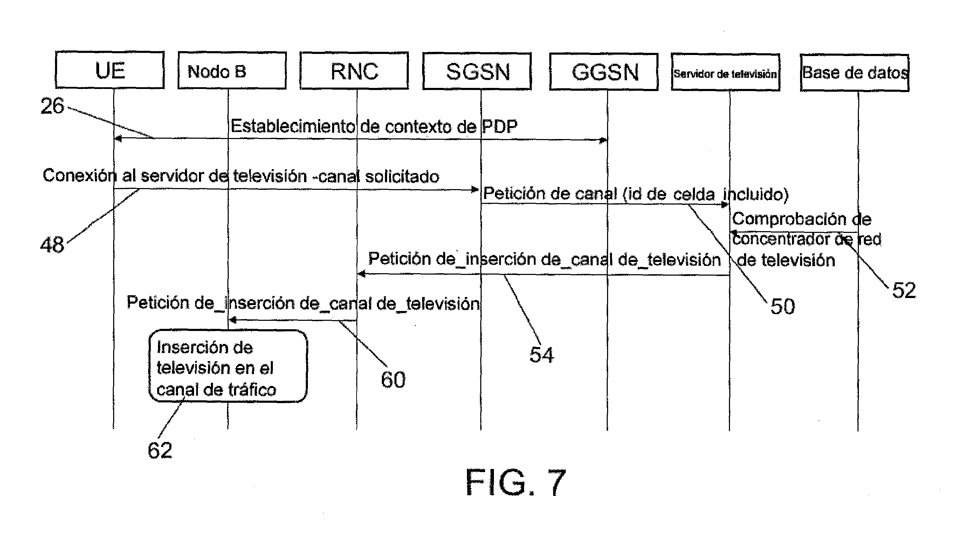

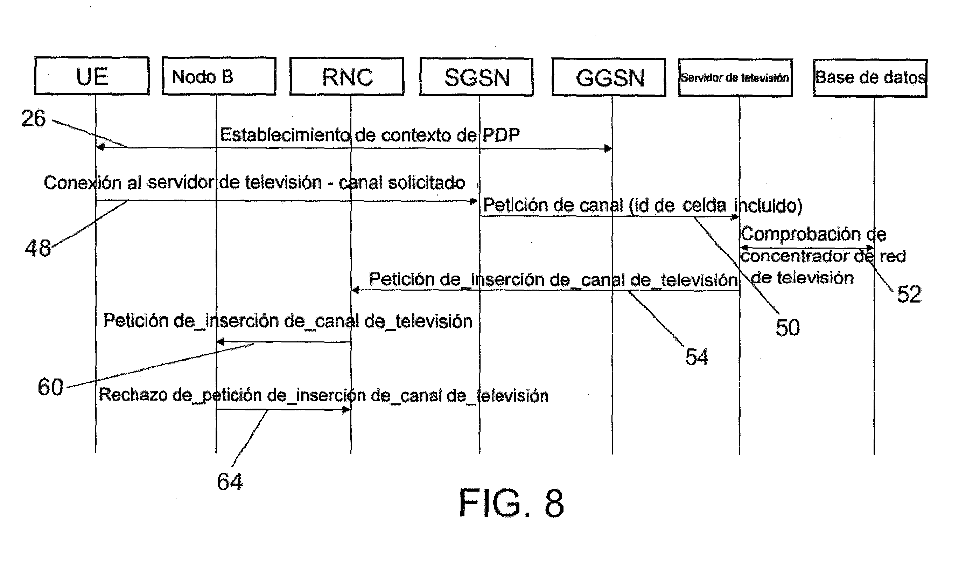

The Node B, which receives the message requesting TV channel insertion from the RNC, has two options. The first option is to insert the channel in the user plane of the UE connection, acting as TV network hub (see figure 7, step 62). The second option is to reject the request by sending a corresponding message 64 to the RNC, as shown in figure 8. This may happen for example, due to malfunctioning of the decoder system, lack of baseband resources to encode the data, etc.

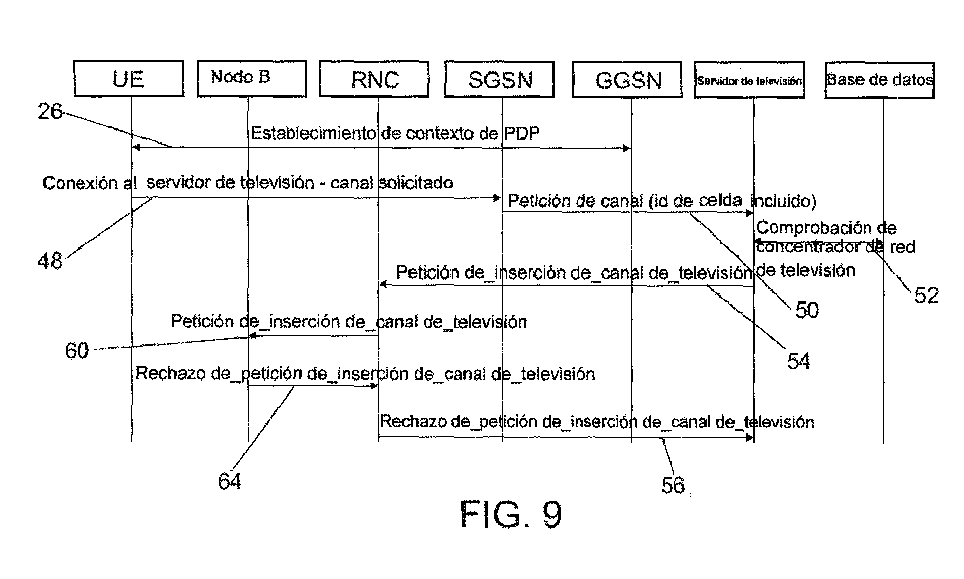

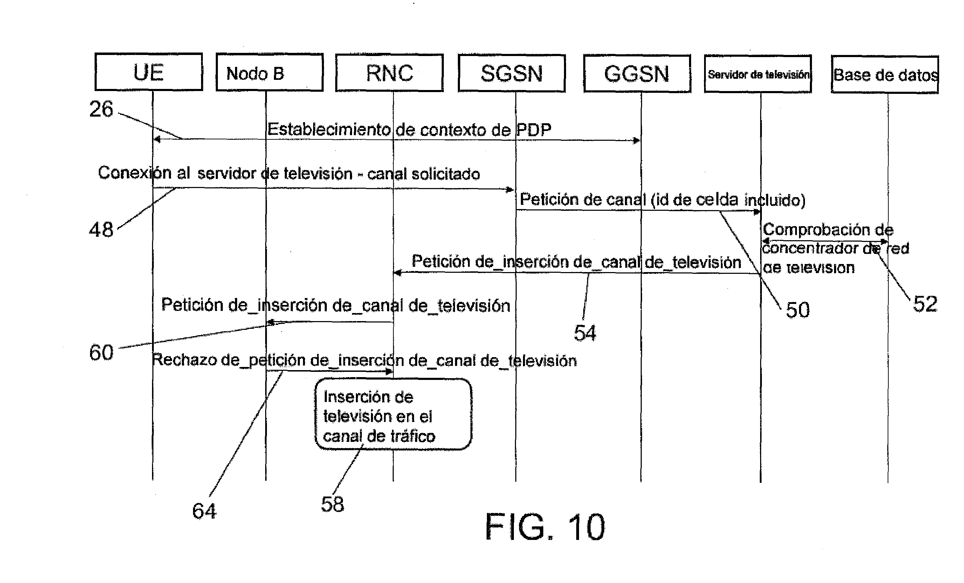

When receiving a rejection of a node B, the RNC has two options. The first option is to send a message 56 rejecting the TV channel insertion request to the TV server, as shown in figure 9. The TV server then sends the requested signal TV to the UE as earlier described with reference to figure 3. The second option is to insert the channel directly in the user plane of the UE connection (see figure 10, step 58), acting as TV network hub. Of course this is only possible when the RNC is provided with a TV network hub.

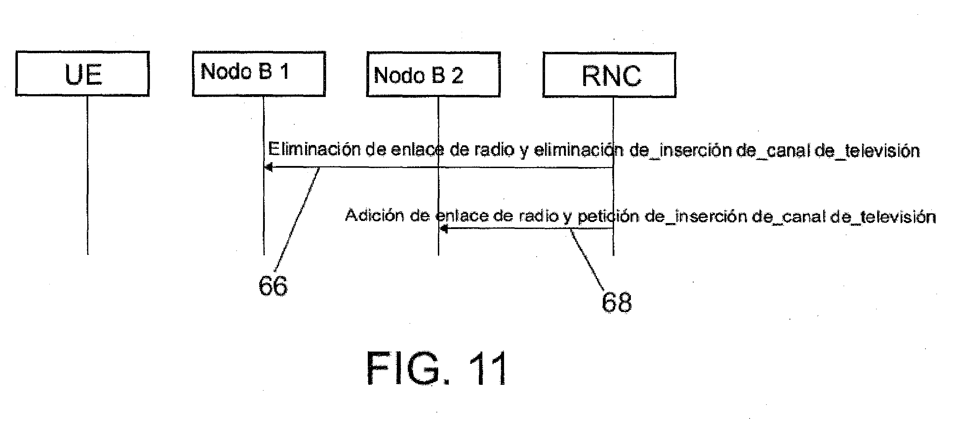

If the TV network hub is located in the Node B, the mobility procedure may be as follows. The RNC takes the decision of making a handover of the UE to another node B. Then there are two options. According to a first option which is only possible if the RNC comprises a TV-network hub, it takes control of the handover and acts as TV network hub, by inserting the TV signal and sending a message to the Node B to remove the TV insertion. According to a second option, the RNC sends a message 66 to the old Node B to remove the TV insertion and sends message 68 to request the TV channel insertion to the new Node B. This signalling procedure is shown in figure 11.

Disconnection from the TV broadcast service may occur in two ways. It may be requested by the terminal (UE) after a user input in this sense or it may occur due to a call drop. If it is requested by the UE, then a signalling message is sent to the TV server, which sends a message for removing the TV channel insertion to the RNC.

If there is a call drop, the RNC detects this call drop, and as a result the RNC sends the message 44 for requesting removal of the TV channel insertion to the TV server.

The present invention may be implemented by providing the appropriate network nodes (nodes B, RNCs or both) in the radio access network with the necessary hardware and computer program of the TV network hub and by providing the nodes B, RNCs and TV server(s) with the appropriate computer program for implementing the signalling procedure, shown with reference to figures 3-11.

While the invention has been illustrated and described in detail in the drawings and foregoing description, such illustration and description are to be considered illustrative or exemplary and not restrictive; the invention is not limited to the disclosed embodiments.

For example, the present invention may be implemented in the Evolved Nodes-B (eNB) of a Long Term Evolution (LTE) cellular communication network, currently being standardised and also often referred to as the fourth generation (4G) cellular network or in second generation (2G) enhanced cellular communication networks. In this latter case, the control node functionality described herein above is implemented in Base Station Controllers (BSC) and the base station functionality in Base Transceiver Stations (BTS).

Other variations to the disclosed embodiments can be understood and effected by those skilled in the art in practising the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. Method for use in a cellular communication network of providing broadcast content to a mobile terminal (10) comprising the following steps:
- receiving the broadcast content (24) from a broadcast content source external to the cellular communication network by a broadcast content network hub (32) located in the radio access network (12) of the cellular communication network; and
- providing the broadcast content from the broadcast content network hub (32) to the mobile terminal over a user connection (30).

2. Method according to claim 1, wherein the provision of the broadcast content is initiated by a signalling procedure (28) between the mobile terminal (10) and a broadcast content server (22) resulting in the set-up of a user connection (30) from the broadcast content server to the mobile terminal and wherein the broadcast content is inserted (58,62) by the broadcast content network hub into said user connection.

3. Method according to claim 2, wherein:
- a request (48,50) for broadcast content of a mobile terminal is sent to the broadcast content server comprising a location of the mobile terminal;
- the broadcast content server selects (52) a broadcast content network hub out of a plurality of broadcast content network hubs for providing the broadcast content to the mobile terminal based on the location of the mobile terminal; and
- in case that a broadcast content network hub is available a request (54) for broadcast content insertion into the user connection is sent to a control node (16) located in the radio network of the cellular communication network.

4. Method according to claim 3, wherein the broadcast content server (22) obtains information regarding a model and a software version of the mobile terminal (10), determines a content format, including a set of supported data rates, of the broadcast content to be provided to the mobile terminal and includes information regarding the content format in the request for broadcast content insertion.

5. Method according to claim 3 or 4, wherein in case that a broadcast content network hub is not available, the broadcast content server sends the requested broadcast content to the mobile terminal over the user connection.

6. Method according to claim 1 or 2, wherein broadcast content network hubs are located in a plurality of base stations (14) of the radio network.

7. Method according to claim 6, wherein in case of handover of the mobile terminal from a first base station to a second base station a control node sends a request (66) to the first base station to remove the insertion of the broadcast content into the user connection of the mobile terminal and a request (68) to the second base station for broadcast content insertion into the user connection of the mobile terminal.

8. Method according to claim 6, wherein additionally a broadcast content network hub is located in a control node of the plurality of base stations.

9. Network element (14,16) located in the radio access network (12) of a cellular communication network and comprising a broadcast content network hub (32), the broadcast content network hub being configured for:
- receiving broadcast content (24) from a broadcast content source external to the cellular communication network; and
- providing the broadcast content to a mobile terminal (10) over a user connection (30).

10. Cellular communication network comprising the network element (14,16) according to claim 9 and further comprising a broadcast content server (22) configured for initiating the provision of the broadcast content in response to a signalling procedure (28) between the mobile terminal and the broadcast content server by setting up a user connection (30) from the broadcast content server to the mobile terminal and wherein the broadcast content network hub is configured for inserting the broadcast content into said user connection.

11. Cellular communication network according to claim 10, wherein the broadcast content server (22) is further configured for:
- receiving a request (50) for broadcast content of a mobile terminal comprising a location of the mobile terminal;
- selecting (52) a broadcast content network hub out of a plurality of broadcast content network hubs for providing the broadcast content to the mobile terminal based on the location of the mobile terminal; and
- in case that a broadcast content network hub is available sending a request (54) for broadcast content insertion into the user connection to a control node (16) located in the radio access network of the cellular communication network.

12. Cellular communication network according to claim 11, wherein the broadcast content server (22) is further configured for:
- obtaining information regarding a model and a software version of the mobile terminal (10),
- determining a content format, including a set of supported data rates, of the broadcast content to be provided to the mobile terminal and
- including information regarding the content format in the request for broadcast content insertion.

13. Cellular communication network according to claim 11 or 12, wherein the broadcast content server is configured for sending the requested broadcast content to the mobile terminal over the user connection in case that a broadcast content network hub is not available.

14. Cellular communication network according to claim 10, wherein broadcast content network hubs are located in a plurality of base stations (14) of the radio network.

15. Cellular communication network according to claim 14, wherein in case of handover of the mobile terminal from a first base station to a second base station a control node is configured for sending a request (66) to the first base station to remove the insertion of the broadcast content into the user connection of the mobile terminal and a request to the second base station for broadcast content insertion (68) into the user connection of the mobile terminal.
